# EUROPEAN PATENT APPLICATION

(11) **EP 4 845 139 A1**
(43) Date of publication of application: **25.11.2026**
(21) Application number: 26180069.2
(22) Date of filing: 20.05.2026
(51) Int. Cl.: H04N 1/00, H04N 1/60, H04N 1/407, H04N 1/409, H04N 1/403

(54) **IMAGE READING DEVICE AND CONTROL METHOD FOR ENSURING DUAL READING MODES CONSISTENT QUALITY**

(30) Priority: 23.05.2025 JP 2025086006
(71) Applicant: KYOCERA Document Solutions Inc., Osaka-shi, Osaka 540-8585 (JP)
(72) Inventor: Kitabayashi, Manabu, Osaka-shi, 540-8585 (JP)
(74) Representative: Plougmann Vingtoft a/s

(57) **Abstract**

An image reading device includes an image reading portion and a generation processing portion. The generation processing portion generates correction information to be used in a correction process in both a first reading mode that reads a document conveyed by an ADF at a reading position, and a second reading mode that reads a document placed on a document table. The correction process is a process that corrects density of image data read by the image reading portion. The generation processing portion generates first correction information to be used as correction information in the second reading mode, based on the density of the first image data read from the reference document in the second reading mode. The generation processing portion generates second correction information that is used as correction information in the first reading mode, using correlation information that shows a correlation between image data read in the first reading mode and the second reading mode, respectively.

## Description

### INCORPORATION BY REFERENCE

This application is based upon and claims the benefit of priority from the corresponding Japanese Patent Application No. 2025-086006 filed on May 23, 2025, the entire contents of which are incorporated herein by reference.

This present disclosure relates to an image reading device and a method for controlling the image reading device.

### BACKGROUND

As related technology, an image reading device that corrects a reading level is known. This image reading device has a reading mode (first reading mode) in which a scanner portion moves and reads a document placed on a contact glass, and a reading mode (second reading mode) in which a scanner portion reads a document that has been conveyed to a reading position by a conveying device. In addition, in each of the first and second reading modes, when a predetermined reference document is scanned by the scanner portion, the image reading device corrects the reading level in the first reading mode and the reading level in the second reading mode to be the same.

### SUMMARY

An image reading device according to an aspect of the present disclosure includes an image reading portion and a generation processing portion. The image reading portion reads image data from a document using either a first reading mode, in which a document is conveyed by a conveying device and read at a reading position, or a second reading mode, in which a document is placed on a document table and read. The generation processing portion generates correction information used in a correction process that corrects a parameter related to image quality of the image data read by the image reading portion in each of the first reading mode and the second reading mode. The generation processing portion generates, based on a parameter of the first image data read from a reference document in one reading mode among the first reading mode or the second reading mode, first correction information to be used as the correction information in the correction process in the one reading mode. The generation processing portion uses correlation information indicating a correlation of the image data read in each of the first reading mode and the second reading mode to generate second correction information to be used as the correction information in the correction process in the other reading mode.

A control method for an image reading device according to another aspect of the present includes reading image data from a document by a first reading mode in which a document being conveyed by a conveying device is read at a reading position, or by a second reading mode in which a document being placed on a document table is read. The control method for the image reading device includes generating correction information used in a correction process for correcting a parameter related to image quality of the read image data in each of the first reading mode and the second reading mode. The process of generating the correction information generates, based on a parameter of first image data read from a reference document in one reading mode among the first reading mode or the second reading mode, first correction information to be used as the correction information in the correction process in the one reading mode. The process of generating the correction information uses correlation information indicating a correlation of the image data read in each of the first reading mode and the second reading mode to generate second correction information to be used as the correction information in the correction process in the other reading mode.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a schematic block diagram showing a configuration of an image reading device according to an embodiment.
FIG. 2 is a schematic cross-sectional view showing a configuration of an ADF and an image reading portion in an image reading device according to an embodiment.
FIG. 3 is a schematic cross-sectional view showing a partially enlarged configuration of an ADF and an image reading portion in an image reading device according to an embodiment.
FIG. 4 is a schematic cross-sectional view showing a configuration of a substrate according to an embodiment.
FIG. 5 is a schematic cross-sectional view showing another configuration of a substrate according to an embodiment.
FIG. 6 is a schematic plan view showing a configuration of a reference document according to an embodiment.
FIG. 7 shows a correlation between presence or absence of a resin film and an L* value.
FIG. 8 is an explanatory diagram for describing problems of a correction process.
FIG. 9 is an explanatory diagram for describing problems of a correction process.
FIG. 10 is an explanatory diagram for describing problems of a correction process.
FIG. 11 is an explanatory diagram showing an example of a generation process in a first generation example of an image reading device according to an embodiment.
FIG. 12 is an explanatory diagram showing another example of a generation process in a first generation example of an image reading device according to an embodiment.
FIG. 13 is an explanatory diagram of a generation process in a third generation example of an image reading device according to an embodiment.
FIG. 14 is a flowchart showing an example of operation of an image reading device according to an embodiment.

### DETAILED DESCRIPTION

### (Embodiments)

Hereinafter, embodiments according to the present disclosure will be described with reference to the drawings. The following embodiments are examples of specific embodiments according the present disclosure, and do not limit the technical scope of the present disclosure.

### [1] Overall Configuration of Image Processing Apparatus

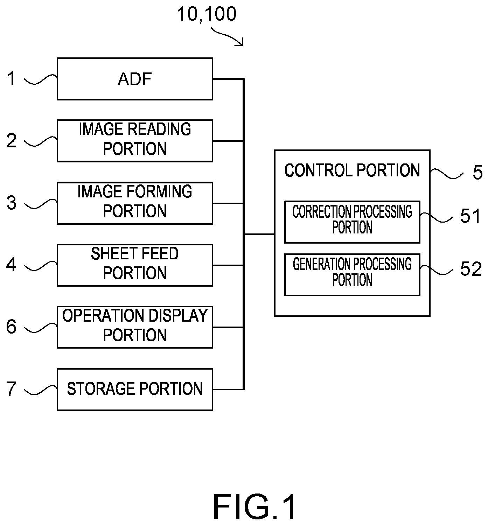

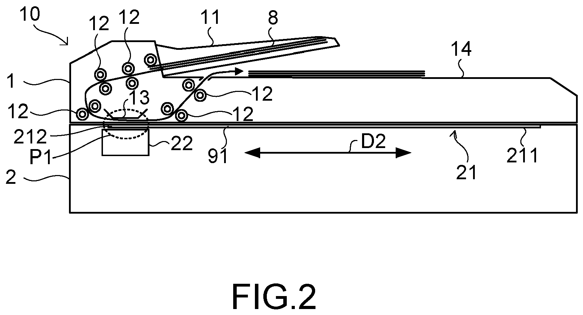

First, with reference to FIGS. 1 and 2, an image processing apparatus 100 including an image reading device 10 according to the present embodiment will be described.

In the present embodiment, as an example, the image processing apparatus 100 is a multifunction peripheral that has multiple functions, including a scanning function for acquiring image data from a document, a printing function for forming an image based on the image data, a facsimile function, and a copy function. Note that the image processing apparatus 100 may be an apparatus other than a multifunction peripheral, as long as it has at least a scanning function.

As shown in FIGS. 1 and 2, the image processing apparatus 100 includes an auto document feeder (ADF) 1, an image reading portion 2, an image forming portion 3, a sheet feed portion 4, a control portion 5, an operation display portion 6, and a storage portion 7.

The ADF 1 is a conveying device that conveys a document 8 from which image data is acquired by the image reading portion 2. As shown in FIG. 2, the ADF 1 includes a document tray 11, a plurality of conveying rollers 12, a document guide 13, and a sheet discharge portion 14.

In the ADF 1, each of the plurality of conveying rollers 12 is driven by a motor (not shown). Thus, the document 8 placed on the document tray 11 is conveyed along the document conveying path formed inside the ADF 1. The document 8 being conveyed along the document conveying path is guided by the document guide 13 onto a second contact glass 212 of a document table 21, and then discharged to the sheet discharge portion 14.

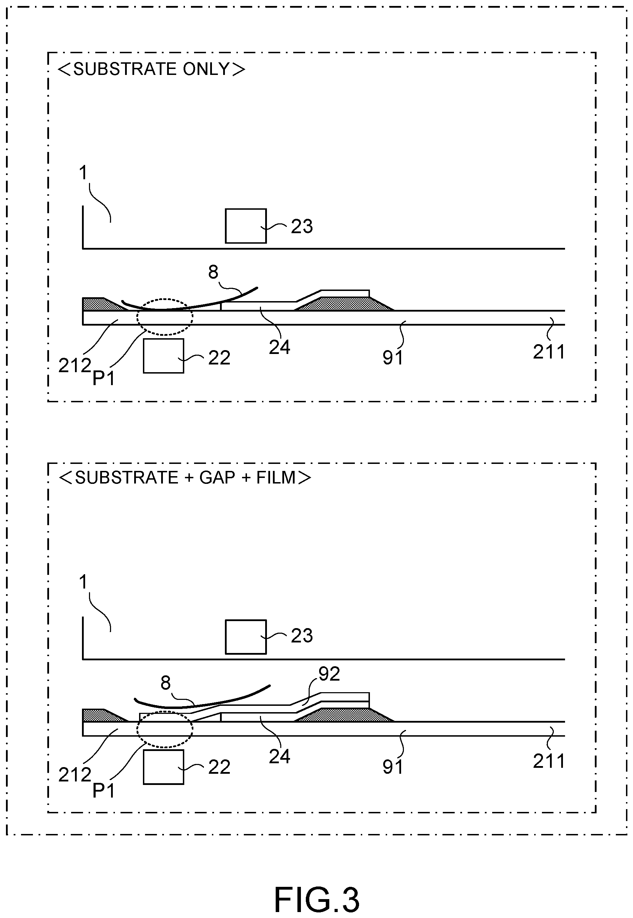

The image reading portion 2 can read an image from the document 8 and acquire image data including the image. More specifically, the image reading portion 2 is an equal magnification optical system and can acquire image data from the document 8 using a contact image sensor (CIS) method. As shown in FIG. 2, the image reading portion 2 includes a document table 21 and a reading unit 22. The reading unit 22 reads an image from a surface of the document 8. In addition, as shown in FIG. 3, the image reading portion 2 also includes a reading unit 23 and a white reference member 24. The reading unit 23 is located in the ADF 1 and is capable of reading images from a back side of the document 8. The white reference member 24 is a member having a white surface that serves as a white reference in shading correction. More specifically, the white reference member 24 is arranged at a position on an upper surface of a second contact glass 212, facing the reading unit 23. Therefore, the reading unit 23 can acquire white reference data by reading the white surface of the white reference member 24.

The document table 21 is provided on an upper surface of a box-shaped housing that houses the various components of the image reading portion 2. The document table 21 includes a first contact glass 211 and a second contact glass 212. In the present embodiment, the first contact glass 211 and the second contact glass 212 are glass formed in a shape of a single flat plate. The document 8 is placed on an upper surface of the first contact glass 211. In the image processing apparatus 100, documents 8 of various sizes are placed on the first contact glass 211, aligned with a placement reference position (not shown) located in an upper left corner of the first contact glass 211. In addition, a plurality of documents 8 can be spread out and placed on the first contact glass 211. The second contact glass 212 transmits light emitted from the reading unit 22 toward the document 8 being conveyed by the ADF 1. Hereinafter, a position between the second contact glass 212 and the document guide 13, where the reading unit 22 reads the document 8 being conveyed by the ADF 1, will be referred to as a "reading position P1".

The ADF 1 is mounted on an upper surface of the document table 21 so as to be able to open and close relative to the first contact glass 211. Thus, the ADF 1 functions as a document cover for the document 8 placed on the first contact glass 211. A pressure plate (not shown) is provided on a bottom surface of the ADF 1. The pressing plate has a pressing surface (not shown) that presses the upper surface of the document 8 placed on the first contact glass 211 against the first contact glass 211 when the ADF 1 is closed. The pressing surface is entirely covered with a solid white flat image. In other words, a solid white image is formed over the entire pressing surface. Note that the pressing surface may be partially or entirely covered with an image of a color other than white.

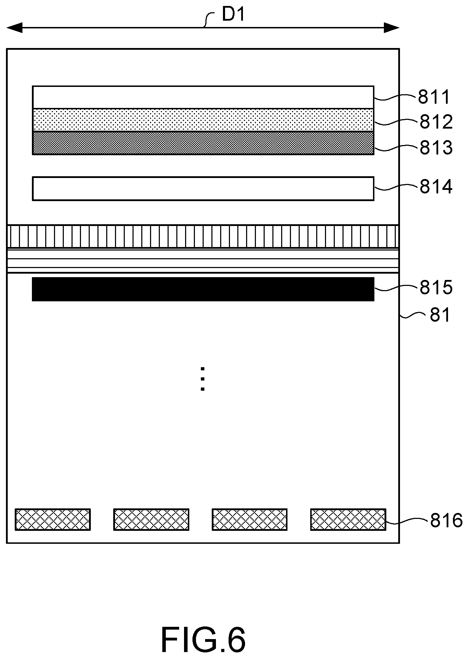

As shown in FIG. 2, the reading unit 22 is provided below the first contact glass 211 and the second contact glass 212. The reading unit 22 is configured to be movable in a sub-scanning direction D2 shown in FIG. 2 by a moving mechanism (not shown) having a drive portion such as a stepping motor. The reading unit 22 includes a light source (not shown), a lens (not shown), and an image sensor (not shown). The light source is a light emitting diode (LED) array including a plurality of LEDs arranged along a main scanning direction D1 (see FIG. 6). The light source irradiates the first contact glass 211 or the second contact glass 212 with light equivalent to one line in the main scanning direction D1. Light emitted from the light source passes through the first contact glass 211 or the second contact glass 212 and irradiates a document 8 placed on the first contact glass 211 or a document 8 being conveyed by the ADF 1.

A lens is a focusing lens that guides reflected light emitted from the light source to an image sensor. The reflected light is light diffusely reflected by the document 8. In the image reading portion 2, when image data is acquired from the document 8 placed on the first contact glass 211, the reading unit 22 is moved in the sub-scanning direction D2 by the moving mechanism. Thus, the light emitted from the light source 221 onto the document 8 is scanned in the sub-scanning direction D2. In addition, in the image reading portion 2, when image data is acquired from the document 8 conveyed by the ADF 1, the reading unit 22 is moved to a position below the second contact glass 212 by the moving mechanism. Thus, the light emitted from the light source passes through the second contact glass 212 and irradiates the document 8 being conveyed by the ADF 1. The image sensor is a complementary metal oxide semiconductor (CMOS) type line sensor, and has a plurality of sensor chips arranged along the main scanning direction D1. The image sensor outputs an electrical signal corresponding to an amount of light the image sensor receives. In the image reading portion 2, light emitted from the light source and reflected by the document 8 passes through a lens and enters the image sensor. Thus, the image sensor outputs an analog electrical signal corresponding to the image on the document 8. The analog electrical signal output from the image sensor is converted into a digital electrical signal (image data) by an analog front end (AFE) circuit (not shown) and input to the control portion 5.

Note that the image reading portion 2 may be a reduction optical system, or it may be a system that acquires image data from the document 8 using a charge coupled device (CCD) method. In addition, a reduction optical system using a CMOS-type line sensor may also be used.

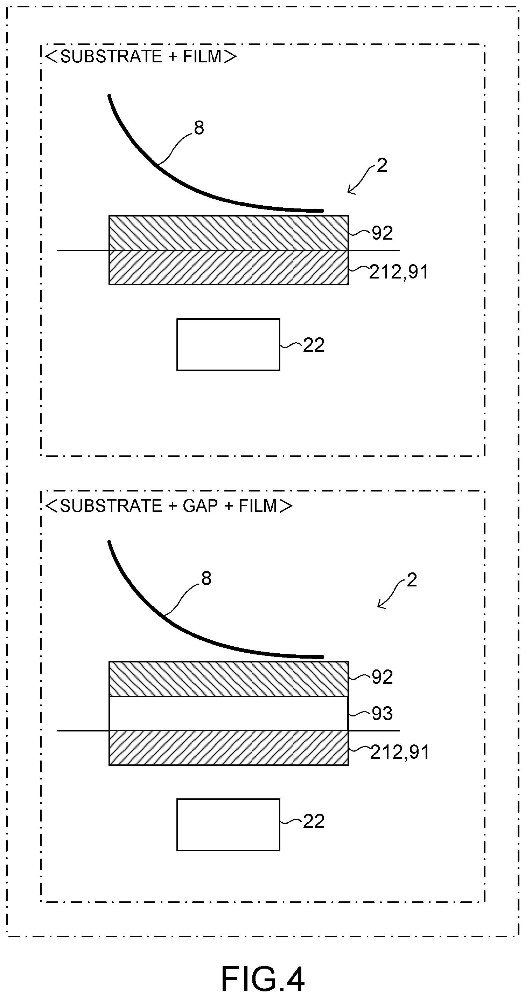

In the present embodiment, as shown in FIG. 4, a resin film 92, such as a polyethylene terephthalate (PET) film, is placed on the upper surface of the second contact glass 212. More specifically, the second contact glass 212 is a substrate 91 located between the reading position P1 and the reading unit 22, and transmits light irradiated from the reading unit 22 toward the reading position P1. The resin film 92 is arranged on at least a portion of a surface on the document 8 side of a substrate 91 (in this case, the entire upper surface of the substrate 91).

Hereafter, the reason for adopting a configuration in which a resin film 92 is placed on the upper surface of the substrate 91 will be explained below with reference to FIG. 3. FIG. 3, "Substrate Only", shows a configuration in which the resin film 92 is not placed on the upper surface of the substrate 91, while FIG. 3, "Substrate + Film" shows a configuration in which the resin film 92 is placed on the upper surface of the substrate 91. Typically, only a substrate 91, which is made of a single piece of glass such as the second contact glass 212, is placed between the reading position P1 and the reading unit 22. Here, for example, when height of the ADF 1 is reduced in order to lower manufacturing cost of the image processing apparatus 100, it may not be possible to sufficiently ensure conveying stability of the document 8.

More specifically, in the present embodiment, in order to lower the height of the ADF1, the reading unit 22 for reading a front surface of the document 8 and a reading unit 23 for reading a back surface of the document 8 are arranged opposite each other with the substrate 91 in between. Therefore, the white reference member 24, which serves as the white reference for shading correction in the reading unit 23, is positioned on the upper surface of the substrate 91, facing the reading unit 23. As shown for the case of "Substrate Only" in FIG. 3, by placing the white reference member 24 on the upper surface of the substrate 91 creates a step at that location. This makes it difficult for the document 8 to be conveyed because the document 8 can get caught on the step, resulting in unstable conveying of the document 8.

Therefore, as shown for the case of "Substrate + Film" in FIG. 3 and FIG. 4, the above problem can be solved by placing a resin film 92 on the upper surface of the substrate 91. More specifically, a resin film 92 is placed on the upper surface of the substrate 91, and specifically, at the reading position P1 on the upper surface of the substrate 91 and at a position that covers the white reference member 24. This eliminates the step created by placing the white reference member 24, and prevents the document 8 from getting caught on the step, thus resolving the issue of difficulty in conveying the document 8.

However, in a configuration in which a resin film 92 is placed on the upper surface of the substrate 91, a problem arises that is different from the above-mentioned problem. In other words, in a configuration in which the resin film 92 is adsorbed onto the upper surface of the substrate 91, a wave-like striped pattern known as Newton's rings may occur. Therefore, when this configuration is adopted, there is a problem in that the striped pattern appears in the image read by the reading unit 22 when reading image data from the document 8, making it impossible to acquire image data with high accuracy.

Thus, as shown for the case of "Substrate + Gap + Film" in FIG. 4, the above problem can be resolved by providing a gap 93 between the substrate 91 and the resin film 92. That is, by providing a gap 93 between the substrate 91 and the resin film 92, it is possible to prevent the formation of a striped pattern caused by the resin film 92 adhering to the substrate 91. Therefore, when this configuration is adopted, the striped pattern described above will not appear in the image read by the reading unit 22 from the document 8, and the image data can be acquired with high accuracy. In the present embodiment, the image reading portion 2 employs the configuration of "Substrate + Gap + Film" shown in FIG. 4.

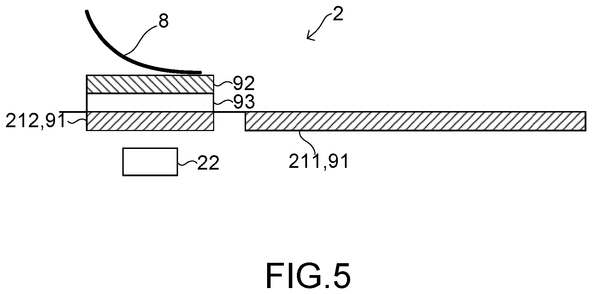

Note that in the present embodiment, the first contact glass 211 and the second contact glass 212 are composed of a single piece of glass, but the embodiment is not limited to this. For example, the first contact glass 211 and the second contact glass 212 may be composed of different types of glass, as shown in FIG. 5. In other words, the image reading portion 2 may have a configuration that includes two substrates 91 made of glass, a resin film 92, and a gap 93, as shown in FIG. 5. In this configuration, one of the two substrates 91 on which the resin film 92 and gap 93 are arranged corresponds to the second contact glass 212, and the other substrate 91 corresponds to the first contact glass 211.

The image forming portion 3 can form an image on a sheet using an electrophotographic method based on image data acquired by the image reading portion 2. The image forming portion 3 includes a photoconductor drum, a charging roller, an optical scanning device, a developing device, a transfer roller, a cleaning device, a fixing device, and a sheet discharge tray. Note that the image forming portion 3 may also form images using other image forming methods, such as an inkjet method.

The sheet feed portion 4 supplies sheets to the image forming portion 3. The sheet feed portion 4 includes a sheet feed cassette and a plurality of conveying rollers.

The control portion 5 performs overall control of the image processing apparatus 100, including the image reading device 10. The control portion 5 includes a central processing unit (CPU), a read only memory (ROM), and a random access memory (RAM). The CPU is a processor that executes various types of arithmetic processing. The ROM is a non-volatile storage device that stores in advance information such as control programs for causing the CPU to execute various types of processes. The RAM is a volatile storage device used as a temporary storage memory (work area) for various types of processes executed by the CPU.

In the control portion 5, various types of control programs pre-stored in the ROM are executed by the CPU. Thus, overall control of the image processing apparatus 100 is performed by the control portion 5. Note that the control portion 5 may also be configured by an electronic circuit such as an integrated circuit (for example, an application specific integrated circuit (ASIC)). In addition, the control portion 5 is a control portion that controls the image reading device 10, and may be a separate control portion from the main control portion that controls the image processing apparatus 100 in an overall manner.

The operation display portion 6 is a user interface device for the image processing apparatus 100. The operation display portion 6 includes a display portion such as a liquid crystal display that displays various types of information in response to control instructions from the control portion 5, and an operation portion such as operation keys or a touch panel that inputs various types of information to the control portion 5 in response to user operations.

The storage portion 7 is a non-volatile storage device. For example, the storage portion 7 is a storage device such as flash memory and non-volatile memory such as an electrically erasable programmable read-only memory (EEPROM) (registered trademark). In addition, the storage portion 7 may be a storage device such as a solid state drive (SSD) or a hard disk drive (HDD).

As related technology, an image reading device that corrects a reading level is known. This image reading device has a reading mode (first reading mode) in which a scanner portion moves and reads a document placed on a contact glass, and a reading mode (second reading mode) in which a scanner portion reads a document that has been conveyed to a reading position by a conveying device. In addition, in each of the first and second reading modes, when a predetermined reference document is scanned by the scanner portion, the image reading device corrects the reading level in the first reading mode and the reading level in the second reading mode to be the same.

In the configuration shown in the related technology described above, unless a reference document is read in each of the two reading modes, it is not possible to adjust density of the images read in each of the two reading modes to be close to the same reference density. Therefore, the configuration shown in the related technology described above has a problem in that the number of steps required to adjust the image data read in each reading mode increases.

In contrast, in the present embodiment, by the following processing executed by the control portion 5 of the image reading device 10, it becomes possible to achieve an image reading device 10 and a control method for the image reading device 10 that can reduce the number of steps required to adjust the image data read in each of the two reading modes.

### [2] Configuration of the Image Reading Device

The image reading device 10, and in particular the various functional portions included in the control portion 5, will be described in more detail below with reference to FIGS. 1 and 2. The image reading device 10 includes an image reading portion 2 and a control portion 5. In addition, the control portion 5 includes a correction processing portion 51 and a generation processing portion 52. In other words, the image reading device 10 includes a correction processing portion 51 and a generation processing portion 52 as functions of the control portion 5.

As previously explained, the image reading portion 2 has a function of acquiring image data from a document 8 placed on the first contact glass 211, and a function of acquiring image data from a document 8 conveyed by the ADF 1. In other words, the image reading portion 2 reads image data from a document 8 in either a first reading mode, which reads a document 8 being conveyed by the conveying device (ADF 1) at the reading position P1, or a second reading mode, which reads a document 8 placed on the document table 21.

The correction processing portion 51 executes a correction process in each of the first reading mode and the second reading mode to correct parameters related to the image quality of the image data read by the image reading portion 2. The correction process is basically executed each time the image reading portions 2 reads a document. In the present embodiment, parameters related to image quality are respective densities (pixel values) of R (red), G (green), and B (blue) elements included in each pixel of image data; however, parameters other than density, such as brightness, may also be used.

More specifically, in each of the first and second reading modes, the correction processing portion 51 multiplies the density of each R element, G element, and B element included in each pixel of the image data read by the image reading portion 2 by a white reference correction coefficient. Here, the white reference correction coefficient is a coefficient used to brighten an entire image by bringing white density of each element closer to a white reference density. The white reference correction coefficient is pre-calculated and stored in the ROM of the control portion 5.

Next, the correction processing portion 51 executes a gamma correction process for each of the R, G, and B elements of each pixel in the first reading mode and the second reading mode, using the density after the white reference correction described above. The gamma correction process is a process that corrects brightness and darkness of the read image by linearly correcting the image data output by the image reading portion 2 to match human sensitivity. In the present embodiment, the correction processing portion 51 executes the gamma correction process by converting the density after the white reference correction for each R element, G element, and B element of each pixel using a lookup table. The lookup table is a data table that shows a correlation between density before gamma correction (density after the white reference correction mentioned above) and density after gamma correction.

Here, the correction processing portion 51 executes a correction process using correction information corresponding to the first reading mode generated by the generation processing portion 52 in the first reading mode. In addition, in the second reading mode, the correction processing portion 51 executes a correction process using correction information corresponding to the second reading mode generated by the generation processing portion 52. Thus, it is possible to ensure consistent image quality whether the document 8 is scanned in the first reading mode or the second reading mode, regardless of variations in performance of optical components in the image reading device 10, such as the reading unit 22.

The generation processing portion 52 executes a generation process to generate correction information used in the correction process executed by the correction processing portion 51 in each of the first reading mode and the second reading mode. The generation process is executed, for example, during the manufacturing or shipment of the image processing apparatus 100 that includes the image reading device 10. When a user uses the image processing apparatus 100, the generation process is basically not executed. That is, the generation processing portion 52 is basically unnecessary when the user is using the image processing apparatus 100.

The generation processing portion 52, based on the parameters of first image data read from a reference document 81 (see FIG. 6) in either the first reading mode or the second reading mode, generates first correction information to be used as correction information in the correction process. In addition, the generation processing portion 52 uses correlation information indicating a correlation between the image data read in the first reading mode and the second reading mode to generate second correction information to be used as correction information in the correction process in other reading mode.

The reference document 81 is a document used when generating correction information used in the correction process executed by the correction processing portion 51. As shown in FIG. 6, one side of the reference document 81 has a plurality of long, strip-shaped color patterns 811 to 815 and a plurality of identification codes 816 formed in a main scanning direction D1 (that is, the width direction of the reference document 81). In the example shown in FIG. 6, five color patterns 811 to 815 are formed on a surface of the reference document 81; however, in reality, many more color patterns are formed.

Of the plurality of color patterns 811 to 815, color patterns 811 to 813 are achromatic patterns that mix white and black. More specifically, the color pattern 811 is an achromatic pattern represented by "N7.5", the color pattern 812 is an achromatic pattern represented by "N2.5", and the color pattern 813 is an achromatic pattern represented by "N5.0". In addition, the color pattern 814 is a white pattern, and the color pattern 815 is a black pattern.

The plurality of identification codes 816 are codes obtained by converting colorimetric values of the corresponding color patterns 811 to 815, and are, for example, one-dimensional codes (such as barcodes) or two-dimensional codes (such as QR codes (registered trademark)). Colorimetric values are expressed, for example, as L* values (indicating lightness), a* values (indicating chromaticity), and b* values (indicating chromaticity), as defined by the International Commission on Illumination (CIE). Moreover, the colorimetric values represent the reference density for each color pattern 811 to 815, and are measured, for example, by the manufacturer of the image reading device 10 using a colorimeter or the like.

In the following, assuming that one of the above reading modes is the second reading mode and the other reading mode is the first reading mode, the processing to be executed by the generation processing portion 52 will be described in detail.

More specifically, the generation processing portion 52 calculates a first gamma correction coefficient based on the density of each pixel of the first image data read from the reference document 81 in the second reading mode. The first gamma correction coefficient is a coefficient used to perform the gamma correction process by multiplying the first gamma correction coefficient by the density of each pixel in the image data read from the document 8 in the second reading mode. The generation processing portion 52 uses the calculated first gamma correction coefficient to generate a lookup table corresponding to the second reading mode as first correction information.

In addition, the generation processing portion 52 uses correlation information to calculate a second gamma correction coefficient used to convert the density of each pixel before gamma correction to the density of each pixel after gamma correction. The second gamma correction coefficient is a coefficient used to perform the gamma correction process by multiplying the second gamma correction coefficient by the density of each pixel in the image data read from the document 8 in the first reading mode. The generation processing portion 52 uses the calculated second gamma correction coefficient to generate a lookup table corresponding to the first reading mode as second correction information.

Thus, in the present embodiment, the generation processing portion 52 generates first correction information in one reading mode (in this case, the second reading mode) by reading image data from the reference document 81 using the image reading portion 2. On the other hand, in the other reading mode (in this case, the first reading mode), the generation processing portion 52 generates second correction information using correlation information. Therefore, in the present embodiment, in the step of generating the second correction information, the step of reading image data from the reference document 81 by the image reading portion 2 can be omitted. Therefore, in the present embodiment, it is possible to reduce the number of steps required to adjust the image data read in each of the two reading modes, and thus reduce the cost required for adjusting the image data.

The following explains the reasons for generating correction information separately for the first reading mode and the second reading mode, and why it is possible to generate the second correction information using correlation information.

In the present embodiment, when the reading unit 22 reads image data from the document 8 in the first reading mode, light emitted from the reading unit 22 and reflected by the document 8 passes through the gap 93 and the resin film 92 in addition to the substrate 91, which is the second contact glass 212. On the other hand, in the second reading mode, when the reading unit 22 reads image data from the document 8, light emitted from the reading unit 22 and reflected by the document 8 passes through the first contact glass 211. Thus, an optical configuration used in the first reading mode and an optical configuration used in the second reading mode are different from each other.

By making the optical configurations used in the first reading mode and the second reading mode different from each other, the density of each pixel in the image data read by the reading unit 22 from the document 8 in the first reading mode and the second reading mode will also be different from each other. More specifically, in the first reading mode, the density of each pixel in the image data read by the reading unit 22 tends to be brighter for black and darker for white compared to the density of each pixel in the image data read by the reading unit 22 in the second reading mode.

This tendency is known to be due to the transmittance of the resin film 92 and a haze value of the resin film 92. More specifically, the light transmittance of the substrate 91, which may be affected by the transmittance of the resin film 92, is generally constant regardless of the L* value. Therefore, a decrease in an amount of light incident on the image sensor during reading is greater for white light. On the other hand, an increase in scattered light incident on the image sensor during reading, which can be affected by haze of the resin film 92, is due to material and surface irregularities of the resin film 92 and is generally constant regardless of the L* value. Therefore, for black, the effect of haze, that is, the increase in scattered light due to haze, becomes dominant, causing the image to appear brighter. In addition, for white, the effect of the transmittance of the resin film 92, that is, the reduction in the amount of light incident on the image sensor, is dominant, causing the image to tend to become darker.

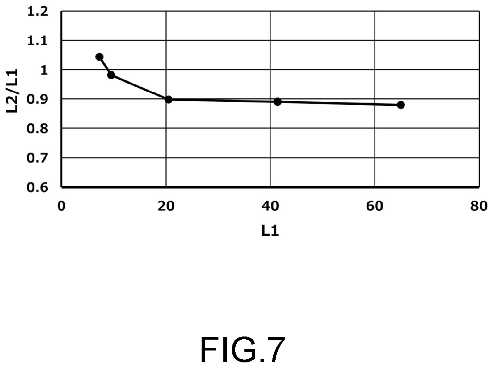

FIG. 7 shows a correlation between presence or absence of the resin film 92 and the L* value. In FIG. 7, the horizontal axis represents "L1," which is the L* value when the resin film 92 is not provided. In addition, in FIG. 7, the vertical axis represents the ratio of "L2" to "L1" ("L2/L1"), which are the L* values when a resin film 92 is provided. The example shown in FIG. 7 represents measurement results when the transmittance of the resin film 92 is 91.0% and the haze is 0.6%. As shown in FIG. 7, the smaller "L1" is, the greater the value of "L2/L1" tends to be. This indicates that when the resin film 92 is provided, black tends to become brighter. In addition, as shown in FIG. 7, the larger "L1" is, the lower the value of "L2/L1" tends to be. This indicates that when a resin film 92 is provided, white tends to appear darker. For example, when the second gamma correction coefficient calculated by the generation processing portion 52 is multiplied by the density of each pixel in the image data read from the document 8 in the first reading mode to perform the gamma correction process, the following problem may arise. In other words, a discrepancy occurs in linearity of brightness and darkness between the first and second reading modes, resulting in a difference in image quality between reading the document 8 in the first reading mode and reading the document 8 in the second reading mode.

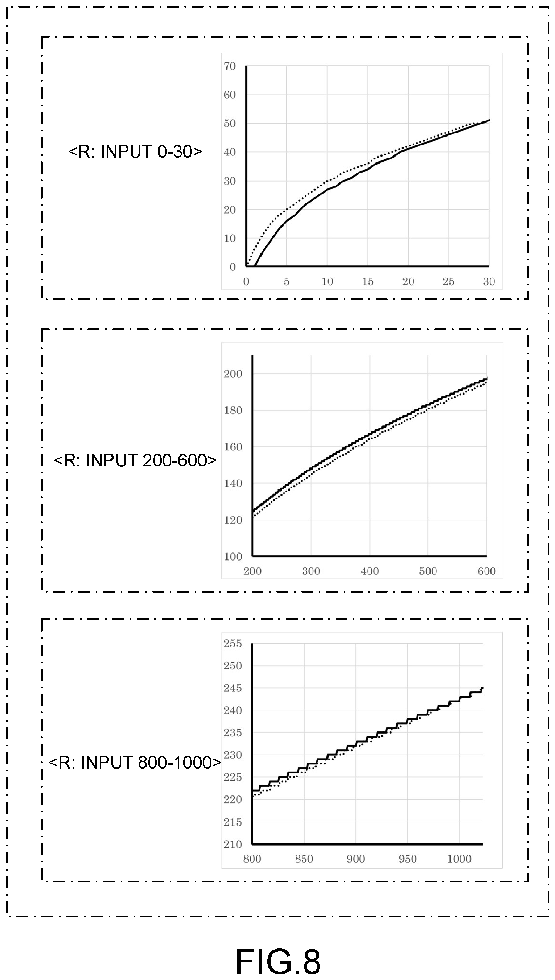

FIGS. 8, 9, and 10 all show the results of actually reading image data from the reference document 81 in the first reading mode and the second reading mode, respectively, and performing the gamma correction process as described above. In each figure, the horizontal axis represents the density gradation value before the gamma correction process in 10 bits, and the vertical axis represents the density gradation value after the gamma correction process in 8 bits. In addition, in each figure, graphs shown with solid lines represent the lookup table corresponding to the first reading mode, and graphs shown with dashed lines represent the lookup table corresponding to the second reading mode.

In FIG. 8, <R: Input 0-30> represents a lookup table where the density gradation value of the R element before the gamma correction process is in the range of 0 to 30. In FIG. 8, <R: Input 200-600> represents a lookup table where the density gradation value of the R element before the gamma correction process is in the range of 200 to 600. In FIG. 8, <R: Input 800-1000> represents a lookup table where the density gradation value of the R element before the gamma correction process is in the range of 800 to 1000.

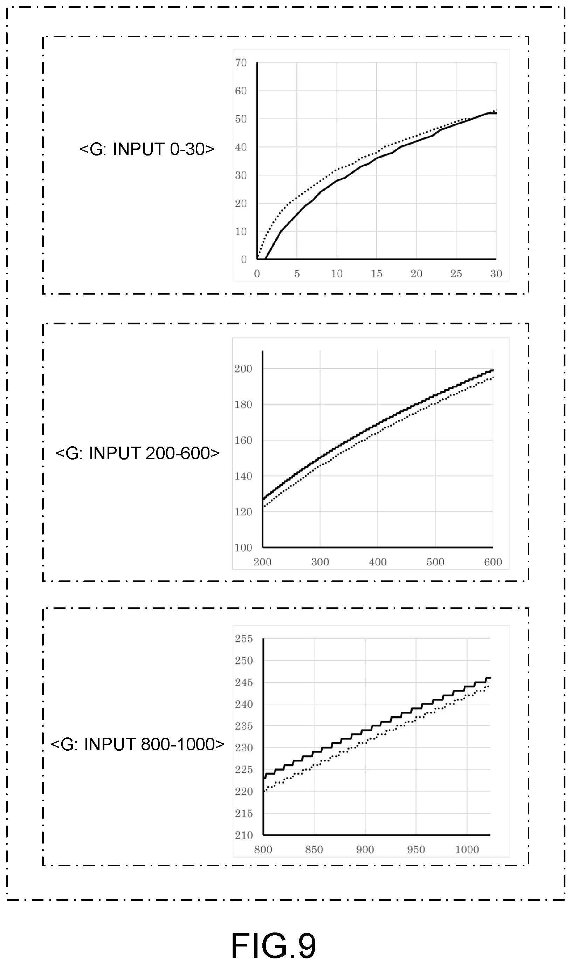

In FIG. 9, <G: Input 0-30> represents a lookup table where the density gradation value of the G element before the gamma correction process is in the range of 0 to 30. In FIG. 9, <G: Input 200-600> represents a lookup table where the density gradation value of the G element before the gamma correction process is in the range of 200 to 600. In FIG. 9, <G: Input 800-1000> represents a lookup table where the density gradation value of the G element before the gamma correction process is in the range of 800 to 1000.

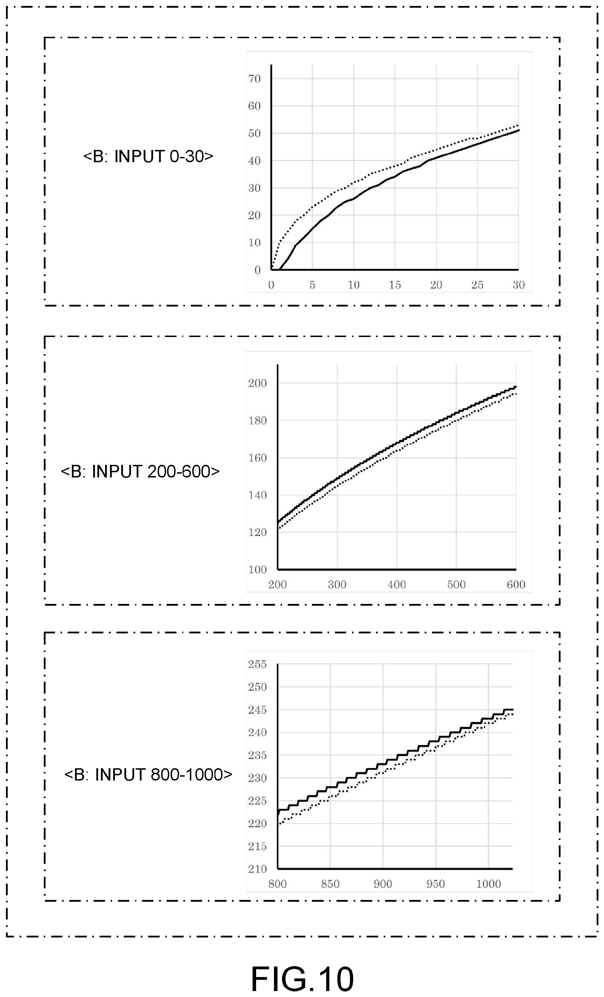

In FIG. 10, <B: Input 0-30> represents a lookup table where the density gradation value of the B element before the gamma correction process is in the range of 0 to 30. In FIG. 10, <B: Input 200-600> represents a lookup table where the density gradation value of the B element before the gamma correction process is in the range of 200 to 600. In FIG. 10, <B: Input 800-1000> represents a lookup table where the density gradation value of the B element before the gamma correction process is in the range of 800 to 1000.

As shown in FIGS. 8 to 10, differences in density gradation values after the gamma correction process occur between the first reading mode and the second reading mode for all of the R, G, and B elements. That is, FIGS. 8 to 10 show that there is a difference between the gamma correction coefficient (or lookup table) required in the first reading mode and the gamma correction coefficient (or lookup table) required in the second reading mode. Therefore, in order to ensure that the image quality of the read image is the same whether the document 8 is read in the first reading mode or in the second reading mode, it is necessary to generate correction information separately for each of the first and second reading modes.

The graphs shown in FIGS. 8 to 10 reveal a correlation between the image data read from the document 8 in the first reading mode and the image data read from the document 8 in the second reading mode. More specifically, the density of black in the image data tends to be brighter when read in the first reading mode than when read in the second reading mode. In addition, the density of white areas in the image data tends to be darker when read in the first reading mode than when read in the second reading mode.

The above correlation is thought to be caused by the transmittance and haze of the resin film 92, as well as floating or orientation of the document 8 when it is conveyed by the conveying device. Of these, the main factors influencing the correlation are the transmittance and haze of the resin film 92, while the influence of other factors on the correlation is smaller compared to the transmittance and haze of the resin film 92. Therefore, as long as an optical configuration with a resin film 92 is adopted, the above correlation is thought to be mainly caused by the transmittance and haze of the resin film 92 and is hardly affected by individual differences in the image reading device 10.

Therefore, by using the above-mentioned universal correlation, that is, correlation information, it is possible to generate second correction information based on image data read from the document 8 in the second reading mode, without performing the step of reading the reference document 81 in the first reading mode.

The generation process performed by the generation processing portion 52 will be described in detail below. First, a process by which the generation processing portion 52 generates first correction information will be described in detail. The first correction information is generated in a process that brings the density of each pixel of the first image data read from the reference document 81 in one reading mode (in this case, the second reading mode) closer to the reference density indicated by the reference document 81.

First, the reference document 81 is placed on the document table 21, and the reading unit 22 reads image data from the reference document 81 using the second reading mode. Thus, the generation processing portion 52 acquires image data read from a plurality of color patterns 811 to 815 of the reference document 81. Next, the generation processing portion 52 multiplies the density of each of the R, G, and B elements included in each pixel of the image data by a white reference correction coefficient for each of the plurality of color patterns 811 to 815.

Next, the generation processing portion 52 substitutes density after the white reference correction described above into "Dᵢₙ" in the following Formula (1) for each of the plurality of color patterns 811 to 815, and calculates "A", "B", and "C" that minimize a difference between "Dₒᵤₜ" and the reference density indicated by the reference document 81. These "A", "B", and "C" correspond to the first gamma correction coefficient.
[Math 1] ${D}_{out} = A \times {{D}_{in}}^{\left(1/C\right)} + B$ (1)

For example, the least squares method can be used to calculate "A", "B", and "C" in Formula (1). More specifically, "A", "B", and "C" can be expressed by the following Formulas (2) and (3) using the least squares method. In Formulas (2) and (3) below, "Tₙ" represents a standard density for each color pattern 811 to 815, and "Dₙ" is expressed as Dₙ = (AVEₙ)(1/C). In the formulas, "Aveₙ" represents an average value of the R element density, G element density, and B element density for each color pattern 811 to 815.
[math. 2] $\begin{matrix}A = \frac{{\sum }_{n = 1}^{5} {D}_{n} \times {\sum }_{n = 1}^{5} {T}_{n} - 5 {\sum }_{n = 1}^{5} \left({D}_{n}\times {T}_{n}\right)}{{\left({\sum }_{n = 1}^{5} {D}_{n}\right)}^{2} - 5 {\sum }_{n = 1}^{5} \left({{D}_{n}}^{2}\right)} \left(2\right) \\ B = \frac{{\sum }_{n = 1}^{5} {D}_{n} \times {\sum }_{n = 1}^{5} \left({D}_{n}\times {T}_{n}\right) - {\sum }_{n = 1}^{5} \left({{D}_{n}}^{2}\right) \times {\sum }_{n = 1}^{5} {T}_{n}}{{\left({\sum }_{n = 1}^{5} {D}_{n}\right)}^{2} - 5 {\sum }_{n = 1}^{5} \left({{D}_{n}}^{2}\right)} \left(3\right)\end{matrix}$

The generation processing portion 52 calculates "A" and "B" by substituting an arbitrary value for "C" in each of the above Formulas (2) and (3). Next, the generation processing portion 52 calculates "E" by substituting the calculated "A", "B", and an arbitrary value "C" into the following Formula (4). For each of the plurality of color patterns 811 to 815, "Dₒᵤₜ" is calculated by substitution into the above Formula (1). In Formula (4) below, "fₙ" is expressed as fₙ = A × (Aveₙ)(1/C) + B.
[Math 3] $E = {\sum }_{n = 1}^{5} {\left({T}_{n}-{f}_{n}\right)}^{2}$ (4)

The generation processing portion 52 then calculates "E" by the above series of calculations while changing the value of "C" by a unit amount. "C" can be varied in increments of 0.01 within a range of, for example, 2.0 to 6.0. The generation processing portion 52 uses "A", "B", and "C", which were used when calculating the smallest "E" among the plurality of calculated "E" values, as the first gamma correction coefficient. The generation processing portion 52 uses the calculated first gamma correction coefficient to generate a lookup table corresponding to the second reading mode as first correction information.

Next, a process by which the generation processing portion 52 generates the second correction information will be explained in detail. In the present embodiment, the process for generating the second correction information can be any one of a first generation example, second generation example, and third generation example described below.

### <First Generation Example>

In the first generation example, the generation processing portion 52 generates parameters for second image data to be read from the reference document 81 by the other reading mode (in this case, the first reading mode) based on the correlation information and the parameter of the first image data (in this case, density). The generation processing portion 52 generates second correction information based on the parameter of the second image data and the reference parameter indicated by the reference document 81.

More specifically, the generation processing portion 52 multiplies the density of each pixel of the first image data read from the reference document 81 in the second reading mode by a fixed magnification factor as correlation information. Thus, the generation processing portion 52 can generate a pseudo-density for each pixel of the second image data read from the reference document 81 in the first reading mode, even without reading the image data from the reference document 81 in the first reading mode. A fixed magnification factor is calculated in advance based on a correlation between the image data read from the document 8 in the first reading mode and the image data read from the document 8 in the second reading mode, obtained through experiment, or the like, and is stored in the ROM of the control unit 5.

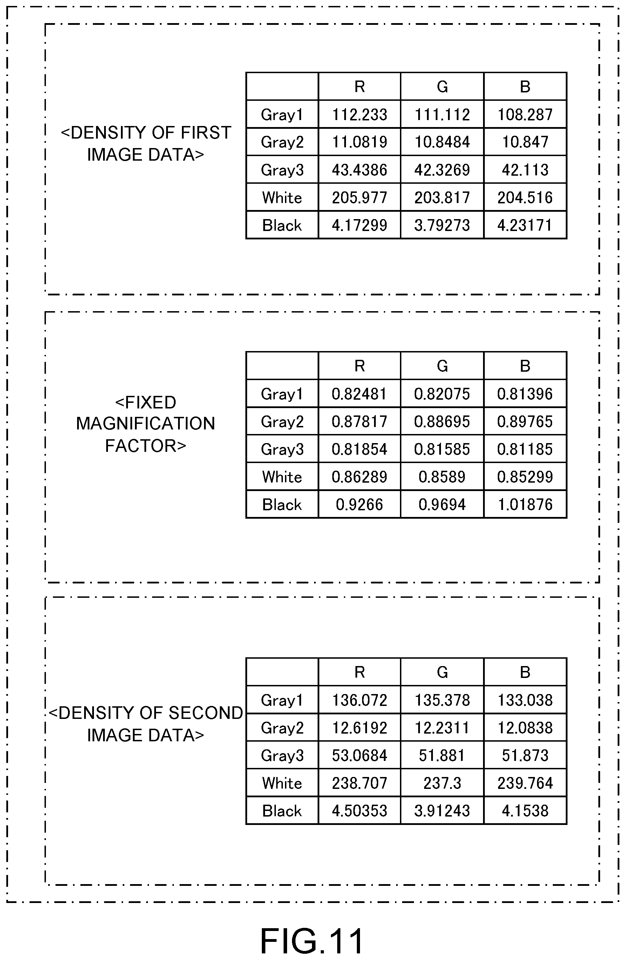

FIG. 11 shows an example of the density of the first image data, the fixed magnification factor (correlation information), and the density of the second image data in the first generation example. In FIG. 11, "Gray1", "Gray2", "Gray3", "White", and "Black" represent the color patterns 811 to 815 of the reference document 81, respectively. In addition, in FIG. 11, "R", "G", and "B" represent the R element, G element, and B element, respectively.

As shown in FIG. 11 under <Fixed Magnification Factor>, the fixed magnification factors for each of the R, G, and B elements are set to magnifications that brighten the density on the white side and darken the density on the black side, based on the correlation described above. For example, by multiplying the density of the R element ("R") in the color pattern 813 ("Gray3") of the first image data by a corresponding fixed magnification factor, it is possible to simulate the density of the R element in the color pattern 813 of the second image data.

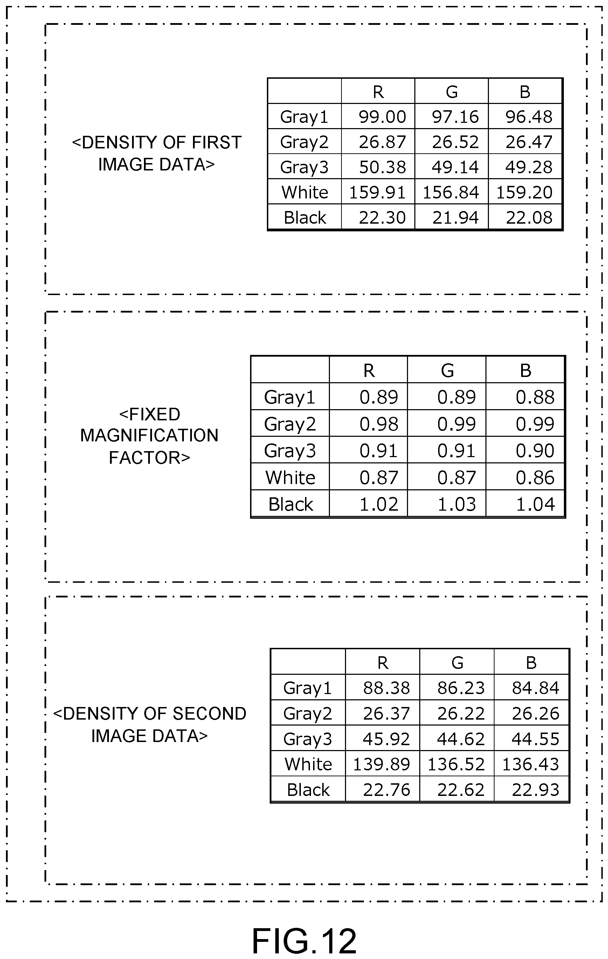

Next, the generation processing portion 52 generates second correction information by executing a process to bring the density of each pixel of the generated second image data closer to the reference density indicated by the reference document 81. More specifically, the generation processing portion 52 calculates "A", "B", and "C" in the above Formulas (1) to (4) as second gamma correction coefficients using the least squares method, similar to the generation process of the first correction information. Note that in Formula (1), "Dᵢₙ" is replaced with the density of each pixel in the second image data, specifically the density after white-reference correction. The generation processing portion 52 uses the calculated second gamma correction coefficient to generate a lookup table corresponding to the first reading mode as second correction information. The density of the first image data in the first generation example described above is the density of the first image data after executing image processing such as white-reference correction. In other words, in the first generation example described above, the density of each pixel in the second image data is artificially generated from the density of each pixel in the first image data after image processing has been executed, but the embodiment is not limited to this. For example, the density of each pixel in the second image data may be generated from the density of each pixel in the first image data before image processing is executed, and then image processing may be executed. FIG. 12 shows an example of the density of the first image data, the fixed magnification factor (correlation information), and the density of the second image data before image processing is executed in the first generation example. In FIG. 12, "Gray1", "Gray2", "Gray3", "White", and "Black" represent the color patterns 811 to 815 of the reference document 81, respectively. In addition, in FIG. 12, "R", "G", and "B" represent the R element, G element, and B element, respectively. In this case, when calculating a fixed magnification factor (correlation information) from image data obtained through experiment, or the like, it is possible to calculate the fixed magnification factor without considering effects of image processing, compared to calculating the fixed magnification factor (correlation information) from image data after image processing has been executed.

### <Second Generation Example>

In the second generation example, the generation processing portion 52 corrects the reference parameter (in this case, density) indicated by the reference document 81 based on the correlation information. The generation processing portion 52 generates second correction information based on a parameter of the first image data and a corrected reference parameter. Note that the correlation information used in the second generation example differs in content from the correlation information used in the first generation example.

More specifically, the generation processing portion 52 multiplies the reference density of each color pattern 811 to 815 of the reference document 81 by a fixed magnification factor for reference density as correlation information. The fixed magnification ratio for the reference density is calculated in advance based on a correlation between the image data read from the document 8 in the first reading mode and the image data read from the document 8 in the second reading mode, obtained through experiment, or the like, and is stored in the ROM of the control portion 5. The fixed magnification factor for the reference density is set to a magnification factor that allows for calculation of a second gamma correction coefficient that brightens the density on the white side and darkens the density on the black side, based on the correlation described above.

Next, the generation processing portion 52 generates second correction information by performing a process that brings the density of each pixel of the first image data read from the reference document 81 in the second reading mode closer to the corrected reference density obtained by multiplying the density by a fixed magnification factor for the reference density. More specifically, the generation processing portion 52 calculates "A", "B", and "C" in the above Formulas (1) to (4) as second gamma correction coefficients using the least squares method, similar to the generation process of the first correction information. Note that in Formulas (2) to (4), "Tₙ" is replaced with the corrected reference density for each color pattern 811 to 815. The generation processing portion 52 uses the calculated second gamma correction coefficient to generate a lookup table corresponding to the first reading mode as second correction information.

### <Third Generation Example>

In the third generation example, the generation processing portion 52 generates second correction information based on the correlation information and the first correction information. Note that the correlation information used in the third generation example differs in content from the correlation information used in the first generation example and the correlation information used in the second generation example.

More specifically, the generation processing portion 52 generates a lookup table corresponding to the first reading mode as second correction information by multiplying the lookup table corresponding to the second reading mode, which was generated as first correction information, by a predetermined function F1 as correlation information.

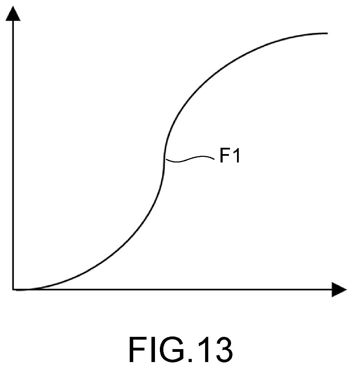

The predetermined function F1 is calculated in advance based on a correlation between the image data read from the document 8 in the first reading mode and the image data read from the document 8 in the second reading mode, obtained through experiment, or the like, and is stored in the ROM of the control portion 5. As shown in FIG. 13, the predetermined function F1 is set to a function that brightens the density on the white side and darkens the density on the black side, based on the correlation described above. In the third generation example, unlike the first and second generation examples, it is possible to generate the second correction information without performing the same processing as the first correction information generation process.

### [3] Operation of Image Reading Device

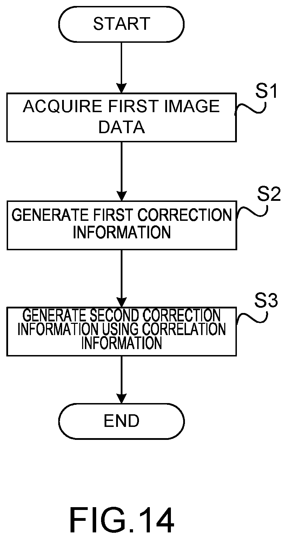

Hereinafter, with reference to FIG. 14, an example of a procedure for processing executed by the image reading device 10, along with an example of a control method for the image reading device 10 in the present embodiment, will be described. Here, steps S1, S2, and so on represent numbers of processing procedures (steps) executed by the image reading device 10.

### <Step S1>

First, the generation processing portion 52 acquires the first image data. Specifically, the reference document 81 is placed on the document table 21, and the reading unit 22 reads image data from the reference document 81 using the second reading mode. Thus, the generation processing portion 52 acquires image data read from the plurality of color patterns 811 to 815 of the reference document 81 as first image data.

### <Step S2>

The generation processing portion 52 generates first correction information based on the first image data acquired in step S1. More specifically, the generation processing portion 52 generates first correction information by executing a process that brings the density of each pixel of the acquired first image data closer to the reference density indicated by the reference document 81. Here, the generation processing portion 52 generates a lookup table corresponding to the second reading mode as the first correction information.

### <Step S3>

The generation processing portion 52 generates second correction information using correlation information. More specifically, the generation processing portion 52 generates a lookup table corresponding to the first reading mode as second correction information, according to one of the generation examples from the first to third generation examples described above.

### [Modification]

In the embodiment described above, one reading mode of the first reading mode and the second reading mode is the second reading mode, and the other reading mode is the first reading mode, but the embodiment is not limited to this. For example, one reading mode may be the first reading mode, and the other reading mode may be the second reading mode. In other words, the generation processing portion 52 may generate first correction information corresponding to the first reading mode based on the image data read from the reference document 81 in the first reading mode. In this case, the generation processing portion 52 can generate second correction information corresponding to the second reading mode using correlation information without reading the reference document 81 in the second reading mode.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An image reading device (10), comprising:
an image reading portion (2) configured to read image data from a document (8) by either a first reading mode that reads a document (8) being conveyed by a conveying device (1) at a reading position (P1), or a second reading mode that reads a document (8) placed on a document table (21); and
a generation processing portion (52) configured to, in each of the first reading mode and the second reading mode, generate correction information used in a correction process for correcting a parameter related to image quality of the image data read by the image reading portion (2); wherein
the generation processing portion (52)
generates first correction information to be used as the correction information in the correction process in one reading mode of either the first reading mode or the second reading mode, based on a parameter of the first image data read from a reference document (81) in the one reading mode; and
generates second correction information to be used as the correction information in the correction process in the other reading mode, using correlation information indicating a correlation of the image data read in each of the first reading mode and the second reading modes.

2. The image reading device (10) according to claim 1, wherein
the one reading mode is the second reading mode.

3. The image reading device (10) according to claim 1 or claim 2, wherein
the generation processing portion (52)
generates a parameter for second image data to be read from the reference document (81) by the other reading mode, based on the correlation information and a parameter of the first image data; and
generates the second correction information based on the parameter of the second image data and the reference parameter indicated by the reference document (81).

4. The image reading device (10) according to claim 1 or claim 2, wherein
the generation processing portion (52)
corrects the reference parameter indicated by the reference document (81) based on the correlation information; and
generates the second correction information based on the parameter of the first image data and the corrected reference parameter.

5. The image reading device (10) according to claim 1 or claim 2, wherein
the generation processing portion (52) generates the second correction information based on the correlation information and the first correction information.

6. The image reading device (10) according to any one of claims 1 to 5, wherein
the image reading portion (2) further comprises:
a substrate (91) located between the reading position (P1) and the reading unit (22) that reads the image data from the document b(8), and configured to transmit light irradiated from the reading unit (22) toward the reading position (P1); and
a resin film (92) arranged on at least a portion of one surface of the substrate (91) on the document (8) side.

7. The image reading device (10) according to claim 6, wherein
a gap (93) is provided between the substrate (91) and the film (92).

8. A control method for an image reading device (10), comprising:
reading image data from a document (8) by either a first reading mode that reads a document (8) being conveyed by a conveying device (1) at a reading position (P1), or a second reading mode that reads a document (8) placed on a document table (21); and
in each of the first reading mode and the second reading mode, generating correction information used in a correction process for correcting parameters related to image quality of the image data read by the image reading portion; wherein
a process of generating the correction information
generates first correction information to be used as the correction information in the correction process in one reading mode of either the first reading mode or the second reading mode, based on a parameter of the first image data read from a reference document (81) in the one reading mode; and
generates second correction information to be used as the correction information in the correction process in the other reading mode, using correlation information indicating a correlation of the image data read in each of the first reading mode and the second reading modes.
